# EUROPEAN PATENT APPLICATION

(11) **EP 0 796 989 A1**
(43) Date of publication of application: **24.09.1997**
(21) Application number: 97301872.4
(22) Date of filing: 20.03.1997
(51) Int. Cl.: F02M 23/09

(54) **Air intake apparatus for an internal combustion engine**

(30) Priority: 20.03.1996 GB 9605839
(71) Applicant: Hurley, Derek Melvin, Llandyssul Dyfed SA44 5PS (GB)
(72) Inventor: Hurley, Derek Melvin, Llandyssul Dyfed SA44 5PS (GB)
(74) Representative: Davies, Gregory Mark

(57) **Abstract**

A presure operated air valve (2) is openable from a closed position to permit air flow through the valve in response to pressure variations downstream of the valve. The valve is openable over a range of differing degrees of opening dependent upon differing degrees of pressurisation downstream of the valve. For multi-cylinder combustion engines, the valve is preferably connected to an auxiliary manifold (3) connected to the main engine inlet manifold (7) via connecting conduits (17) for each respective engine cylinder.

## Description

The present invention relates to air intake apparatus for an internal combustion engine, and in particular to such apparatus for use with the combustion engine of a vehicle.

In certain conditions, the internal combustion engine of a vehicle draws fuel which is not used, which results in production of excess carbon monoxide pollution, and poor fuel economy. For example, when driving downhill or decelerating in gear, a vacuum (negative pressurisation) is generated in the inlet manifold of the engine, but excess fuel which is drawn into the engine as a result is not used up, because insufficient load is present on the engine. Furthermore, when idling, the lowered manifold pressure causes more fuel than is required to be drawn into the fuel intake system.

Proposals have been made to draw auxiliary air into the fuel intake system via an auxiliary air intake valve, when inlet manifold pressure drops below a predetermined level (for example in the situations mentioned above). Such a proposal is disclosed, for example, in GB-A-1519584 where a valve is described which opens fully at a predetermined manifold pressurisation (vacuum) to permit auxiliary air to be drawn into the system. The valve disclosed is effectively a "full on-full off" valve, and the level of pressurisation at which air is permitted to be drawn into the system is determined by the energisation of a spring. A major disadvantage of the valve disclosed is that in order to adapt the valve to different engines, a threaded nut must be used to secure parts of the valve at required orientations (determined by trial and error) to ensure correct energisation of the spring in the closed position, thereby ensuring opening of the valve at the desired pressurisation.

Improved air intake apparatus has now been devised.

According to the invention, there is provided air intake apparatus for an internal combustion engine, which apparatus comprises a pressure operated air valve openable from a closed position to permit air flow through the valve in response to pressure variations downstream of the valve, wherein the valve is openable over a range of differing degrees of opening dependent upon differing degrees of pressurisation downstream of the valve.

In this way, the degree of opening of the valve is effectively proportional to the pressurisation downstream of the valve.

The valve operates to compensate for de-pressurisation downstream of the valve over a range of de-pressurisation levels. Because of the degree of opening of the valve is variable dependent on downstream pressurisation, the valve operates so as to permit differing volume flow of air to pass through the valve in response to changing pressurisation conditions downstream. The valve does not therefore act simply as a "full on-full off" valve actuated at a single, pre-determined threshold pressurisation only.

The downstream outlet of the valve is preferably arranged to be communicatively connected to the inlet manifold of the internal combustion engine such that the valve is openable to varying degrees dependent on variation in manifold pressurisation. The intake apparatus acts as an auxiliary (or secondary) air intake in combination with the primary air intake of the engine.

It is preferred that for multi-cylinder combustion engines, the valve is connection to an auxiliary manifold, which auxiliary manifold is provided with connecting conduits arranged to extend to and connect with the main engine inlet manifold adjacent each respective cylinder. The connecting conduits are typically removably connected to the auxiliary manifold via disconnectable tubing, hosing or the like.

It is preferred that biasing means (preferably comprising a spring) is provided to normally bias the valve to its closed position.

Advantageously, the valve comprises a valve element arranged, in the valve closed position, to seat in a valve opening, the valve member being displaceable to open the valve by changing the effective size of the valve opening, thereby to vary the volume flow of air through the valve.

It is preferred that the valve element comprises an elongate tapered portion arranged in the closed position to extend upstream through the valve opening by a maximum extent, and in increasingly displaced positions to extend upstream through the valve opening by decreasing amounts.

It is preferred that the valve element extends downstream of the valve opening through the valve outlet, advantageously being provided with a pressure surface at its distal end.

Desirably, the valve comprises a chamber or tube extending between the valve opening and the valve outlet, which chamber or tube has a cross-sectional area greater than the maximum effective cross-sectional area of the valve opening.

Advantageously, the cross-sectional area of the chamber or tube is greater than the cross-sectional area of the portion of the valve element received within the chamber or tube such that a space (typically an annular space) is defined between the valve element and the chamber or tube wall.

The valve outlet is preferably provided with a screw threaded connection for connecting to the engine inlet manifold, or more preferably the auxiliary manifold.

It is preferred that the biasing means is provided upstream of the valve opening.

Desirably, the valve is provided with a filter upstream of the valve opening, which filter is preferably removable.

It is preferred that the air intake apparatus further comprises air accelerating or jetting means downstream of the valve arranged to jet air fed through the valve into the engine inlet manifold.

It is believed that such a feature is novel and inventive per se. The provision of air accelerating/jetting means causes the auxiliary air fed via the valve to swirl and create turbulence in the combustion chamber. This promotes a more complete combustion of the fuel, resulting in a cleaner, smoother running engine.

Advantageously, the air accelerating/jetting means comprises one or more venturi type jets.

Air intake apparatus according to the invention will now be described in a specific embodiment, by way of example only, and with reference to the accompanying drawings, in which:
Figure 1 is a schematic representation of an internal combustion engine provided with air intake apparatus according to the invention;
Figure 2 is a detailed schematic representation of the air intake apparatus shown in Figure 1; and
Figures 3 and 4 are more detailed views of the valve comprising the air intake apparatus of Figures 1 and 2 in the closed and open positions respectively.

Referring to the drawings, there is shown air intake apparatus, generally designated 1, for an internal combustion engine. Apparatus 1 comprises a valve 2 connected to an auxiliary manifold 3 by a screw threaded outlet 4. Manifold 3 is provided with four respective outlet ports 5 which are connected by heat resistant tubing 17 to respective venturi injector jets 6 provided in the main engine inlet manifold 7.

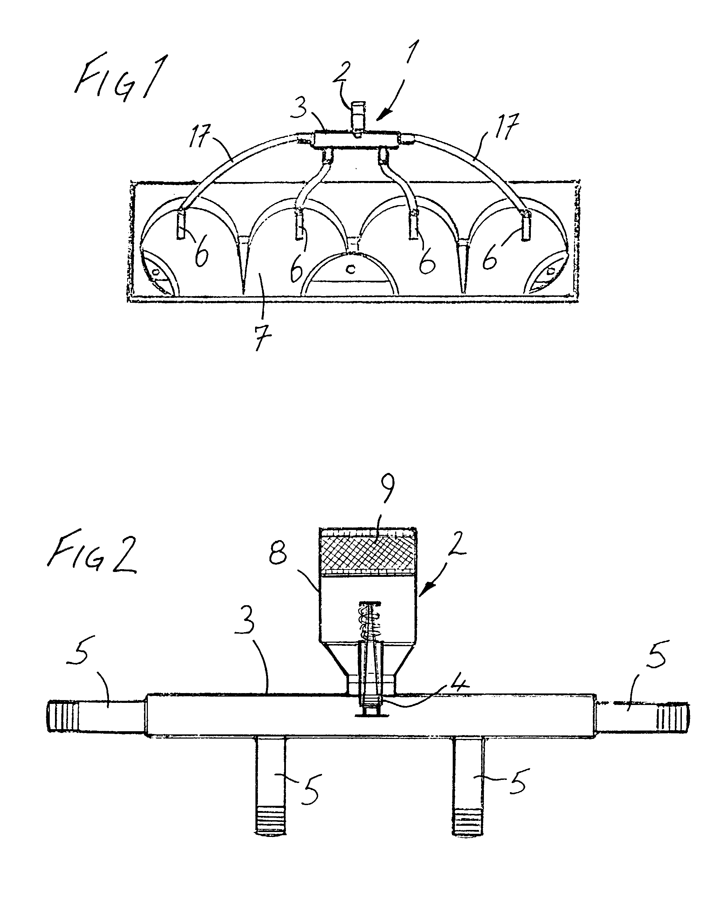

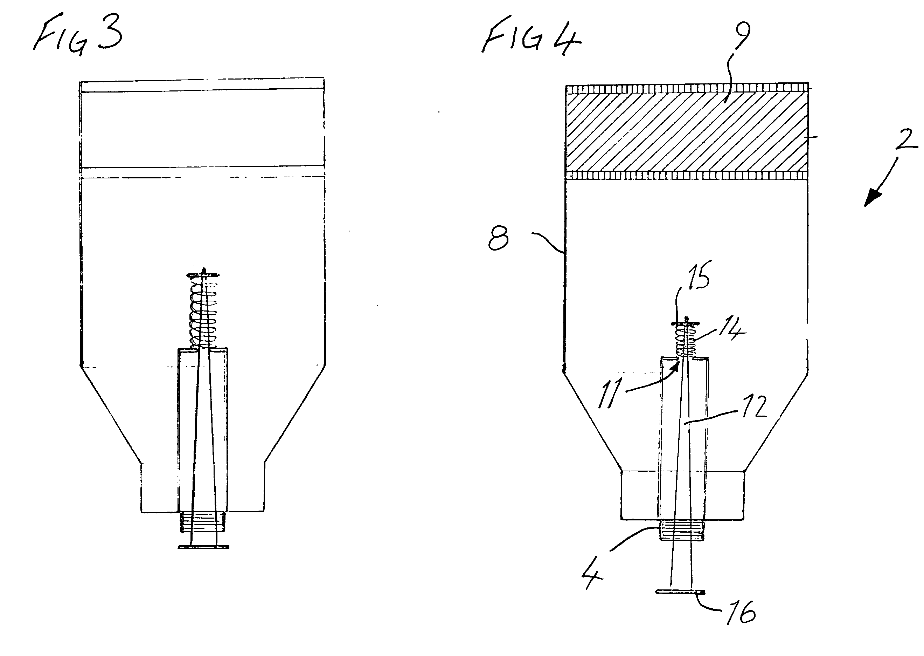

As best shown in Figures 2 to 4, valve 2 comprises a housing 8 provided with a removable air filter 9 through which air is drawn into the valve. A choke chamber or tube 10 communicating with valve outlet 4 is provided with a circular valve opening 11 through which extends the proximal end of a tapered valve element 12. A biasing spring 14 acts on a retainer circlip 15 connected to the proximal end of valve element 12, and also on the upstream side of valve opening 11. The biasing spring acts so as to normally close the valve by ensuring valve element 12 is held in a retracted position in which the outer surface of the tapered valve element engages in the valve opening to close the valve. The distal end of the valve element is provided with a pressure plate 16 which in use is positioned internally of the auxiliary manifold.

In use, when the pressure in the manifold decreases (i.e. the vacuum increases) the valve element is caused to be displaced from the retracted position, moving against the biasing spring, thereby opening the valve opening 11 by a degree dependent on the level of the pressurisation in the manifold. When the valve is opened in this way, air is drawn into the auxiliary manifold and directed via the heat resistant tubing to the venturi jets 6, where the auxiliary air drawn in through valve 2 is jetted directly into the inlet port of the respective combustion chambers. Swirl and turbulence is imparted to the jetted air by the venturi jets which results in a more complete combustion of the fuel resulting in a cleaner, smoother running engine.

The effective size of the valve opening 11 depends upon the degree of displacement of the valve element 12. The volume flow of auxiliary air is therefore dependent on the level of pressurisation in the engine inlet manifold 7. Valve opening 11 is provided at the proximal end of choke tube 10, the distal end of which defines the valve outlet 4. The cross-sectional area of the choke tube 10 (transverse to its axis) is greater than the maximum effective cross sectional area of the valve opening 11 with the valve element 12 at its maximum displaced position. The cross-sectional area of choke tube 10 is also greater than the maximum cross-sectional area of the tapered portion of the valve element 12. Both of these features ensure that the volume flow rate of auxiliary air through the valve 2 is dependent upon the displacement of valve element 12.

The valve is fully automatic and does not need to be adjusted in terms of predetermination of opening pressure as is required for prior art valves. Furthermore, the valve does not act simply as an on off valve, but regulates the air flow through the valve depending on the degree of pressurisation in the engine inlet manifold, as the tapered valve element moves to a displaced position depending on the level of pressurisation in the manifold.

Air intake apparatus according to the invention enables auxiliary air flow to be ported for combustion where engine load requirements dictate that the proportion of fuel required in the mixture is less than under full load conditions. This results in a "leaner burn" engine reducing production of carbon monoxide by as much as 50% over conventional engine air intakes, hydrocarbons by on average 25%, and improved fuel economy by approximately 10%.

## Claims

1. Air intake apparatus for an internal combustion engine, which apparatus comprises a pressure operated air valve openable from a closed position to permit air flow through the valve in response to pressure variations downstream of the valve, wherein the valve is openable over a range of differing degrees of opening dependent upon differing degrees of pressurisation downstream of the valve.

2. Air intake apparatus according to claim 1, wherein the downstream outlet of the valve is arranged to be communicatively connected to the inlet manifold of the internal combustion engine such that the valve is openable to varying degrees dependent on variation in manifold pressurisation.

3. Air intake apparatus according to claim 1 or claim 2, wherein biasing means is provided to normally bias the valve to its closed position.

4. Air intake apparatus according to any preceding claim, wherein the valve comprises a valve element arranged, in the valve closed position, to seat in a valve opening, the valve member being displaceable to open the valve by changing the effective size of the valve opening, thereby to vary the volume flow of air through the valve.

5. Air intake apparatus according to claim 4, wherein the valve element comprises an elongate tapered portion arranged in the valve closed position to extend upstream through the valve opening by a maximum extent.

6. Air intake apparatus according to claim 4 or claim 5, wherein the valve comprises a chamber or tube extending between the valve opening and a valve outlet, which chamber or tube has a cross-sectional area greater than the maximum effective cross-sectional area of the valve opening.

7. Air intake apparatus according to claim 6, wherein the cross-sectional area of the chamber or tube is greater than the cross-sectional area of the portion of the valve element received within the chamber or tube such that a space is defined between the valve element and the chamber or tube wall.

8. Air intake apparatus according to any preceding claim, wherein a filter is provided upstream of the valve.

9. Air intake apparatus according to any preceding claim, further comprising air accelerating or jetting means downstream of the valve arranged to jet air fed through the valve into the engine inlet manifold.

10. An internal combustion engine comprising air intake apparatus according to any preceding claim.
